(19) Europäisches Patentamt
European Patent Office
Office européen des brevets

(11) **EP 2 965 982 B1**

(12) **EUROPÄISCHE PATENTSCHRIFT**

(45) Veröffentlichungstag und Bekanntmachung des Hinweises auf die Patenterteilung:
**16.08.2017   Patentblatt 2017/33**

(51) Int Cl.:
*B62M 6/45* *(2010.01)*        *B62M 23/02* *(2010.01)*

(21) Anmeldenummer: **15166941.3**

(22) Anmeldetag: **08.05.2015**

(54) **MOTORISCH UND/ODER MIT MUSKELKRAFT BETREIBBARES FAHRZEUG**

VEHICLE THAT CAN BE MOTORISED AND/OR POWERED BY MUSCLE STRENGTH

VÉHICULE POUVANT ÊTRE ENTRAÎNÉ PAR LA FORCE MUSCULAIRE ET/OU À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2014   DE 102014213504**

(43) Veröffentlichungstag der Anmeldung:
**13.01.2016   Patentblatt 2016/02**

(73) Patentinhaber: **ROBERT BOSCH GMBH**
**70442 Stuttgart (DE)**

(72) Erfinder:
• **Dasbach, Gregor**
  **72074 Tuebingen (DE)**
• **Baumgaertner, Daniel**
  **72070 Tuebingen (DE)**

(56) Entgegenhaltungen:
CN-A- 1 765 692     JP-A- H0 986 476
US-A- 5 922 035     US-A1- 2006 095 191

**Beschreibung**

Stand der Technik

Die vorliegende Erfindung betrifft ein motorisch und/oder mit Muskelkraft betreibbares Fahrzeug, insbesondere Elektrofahrrad, mit einem Energiespeicher.

Bei derartigen Fahrzeugen ist es wichtig, eine Reichweite bzw. eine Restreichweite des Fahrzeugs zu kennen. Üblicherweise werden dabei Algorithmen zur Reichweitenberechnung des Fahrzeugs verwendet, die auf einer Navigationseinheit schätzungsweise anzeigen können, welche Punkte mit der verbliebenen Energie erreicht werden können. In den konventionellen Berechnungsverfahren wird dabei oftmals der bisherige Verbrauch über die gefahrene Strecke ermittelt. Über den aktuellen Ladezustand des Akkus und der Steigung der Fahrstrecke, die über die Navigationseinheit bekannt ist, kann dann die Reichweite in verschiedenen Richtungen angezeigt werden. Jedoch leidet das System darunter, dass oftmals der Umgebungswind nicht bekannt ist. Dadurch können die Schätzungen der Reichweite sehr ungenau sein. Vor allem in Küstennähe, wo sehr oft starke Winde mit eindeutiger Richtung herrschen, kommt diese Reichweitenberechnung an die Grenzen. Ferner sind Fahrzeuge bekannt, bei denen eine Reichweite basierend entweder auf Wetterinformationen oder auf einer Fahrstrecke gemessenen Wetterdaten berechnet wird. Ein solches Fahrzeug ist beispielsweise aus der DE 10 2009 016 869 A1 bekannt. Hierbei handelt es sich um ein Fahrzeug, welches eine Wetterinformationsauswertungseinrichtung zum Empfangen und zur Auswertung von Wetterinformationen, die von einer Verwaltungszentrale oder einem Rundfunksender bereitgestellt werden, und/oder eine Wetterdatenerfassungseinrichtung zum Erfassen von Wetterdaten umfasst. Allerdings kann zum einen eine Berechnung der Reichweite basierend auf den Wetterinformationen ungenau sein, da der Wind lokal und zeitlich sehr schnell schwanken kann. Zum anderen ist eine Berechnung basierend auf mittels einer direkten Messung erfassten Wetterdaten ebenso nachteilig, da die direkte Messung von Wetterdaten zusätzliche Sensoren Der nächstliegende bekanntgewordene Stand der Technik ist dem Dokument US2006095191 zu entnehmen.

Offenbarung der Erfindung

Das erfindungsgemäße motorisch und/oder mit Muskelkraft betreibbare Fahrzeug mit den Merkmalen des Anspruchs 1 weist demgegenüber den Vorteil auf, dass Windinformationen genau berechnet werden können, ohne dass eine direkte Messung von Windparametern erforderlich ist. Dies wird erfindungsgemäß dadurch erreicht, dass ortsabhängige Windinformationen auf Basis von Sensordaten berechnet werden können, wobei die dafür verwendeten Sensoren Parameter des Fahrzeugs oder der Bewegung des Fahrzeugs erfassen. Die Sensoren können entweder schon am Fahrzeug vorhanden sein oder sehr kostengünstig in das Fahrzeug eingebaut werden. Somit kann auf zusätzliche Windmessungssensoren verzichtet werden, was eine Kostenersparnis zur Folge hat. Hierbei weist das motorisch und/oder mit Muskelkraft betreibbare Fahrzeug, insbesondere Elektrofahrrad, einen elektrischen Antrieb, einen Energiespeicher, welcher den elektrischen Antrieb mit Energie versorgt, und eine Berechnungseinheit auf, welche eingerichtet ist, Windinformationen basierend auf einer Fahrzeugmasse, einem Antriebsmoment, einer Fahrzeuggeschwindigkeit und einer Fahrtorientierung zu berechnen. Durch die genaue Berechnung der Windinformationen kann ferner eine genaue Berechnung einer Reichweite bzw. einer Restreichweite ermöglicht werden, wobei die berechneten Windinformationen mitberücksichtigt werden können. Außerdem, abgesehen von der Berechnung der Reichweite, können Windinformationen für den Fahrer bzw. den Nutzer des Fahrzeugs interessant sein. So kann z.B. das Wissen über Windinformationen vorteilhaft bei der Bewertung von Trainingsprogrammen sein. Auch können die Windinformationen beliebigen Dritten, z.B. Energieversorgern oder anderen Fahrern übermittelt werden.

Die Unteransprüche zeigen bevorzugte Weiterbildungen der Erfindung.

Vorzugsweise können die Windinformationen eine Windstärke und/oder eine Windrichtung umfassen. Somit können die für einen Fahrer bzw. einen Nutzer des Fahrzeugs wichtigsten Windparameter mittels der Berechnungseinheit berechnet werden. Somit kann z.B. durch die Windrichtung darauf geschlossen werden, ob auf einer Strecke ein Gegenwind oder ein Rückenwind wirkt.

Weiter bevorzugt kann die Berechnungseinheit ferner eingerichtet sein, die Windinformationen ferner basierend auf einem Streckenprofil einer zu fahrenden Strecke zu berechnen. Als Streckenprofil ist eine Steigung oder ein Gefälle oder eine Ebene einer Strecke zu verstehen. Durch die Berücksichtigung des Streckenprofils kann eine noch genauere Berechnung der Windinformationen ermöglicht werden, was besonders wichtig bei Strecken ist, die große Höhenunterschiede aufweisen.

Insbesondere kann das Streckenprofil mittels eines Beschleunigungssensors und/oder eines barometrischen Drucksensors und/oder eines Neigungssensors bestimmbar sein. Somit kann das lokale Profil einer Strecke in kostengünstiger und genauer Weise bestimmt werden. Ebenso vorstellbar ist das Streckenprofil aus einer Navigationseinheit zu bestimmen, wodurch eine sehr exakte Ermittlung des Streckenprofils bereitgestellt werden kann.

Ferner wird vorgeschlagen, dass die Fahrzeugmasse bevorzugt mittels eines Massenschätzeralgorithmus und/oder mittels eines Gewichtssensors und/oder mittels einer Eingabeinformation und/oder eines vorgegebenen konstanten Werts bestimmbar ist. Als Fahrzeugmasse ist die gesamte Masse des Fahrzeugs und des Fahrers bzw. des Nutzers oder mehrerer Nutzer des Fahrzeugs zu verstehen. Dadurch kann der Bestimmungsweg der Fahrzeugmasse je nach Anwendung angepasst werden. So kann z.B. der Fahrer. bzw. der oder die Nutzer des Fahrzeugs seine bzw. ihre Masse über eine Mensch-Maschine-Schnittstelle eingeben, wobei die Masse des Fahrzeugs als konstanter Wert schon in der Berechnungseinheit beinhaltet sein kann.

Hierbei kann vorzugsweise die Fahrtorientierung mittels einer Navigationseinheit oder eines Magnetfeldsensors bestimmbar sein. Mittels einer Navigationseinheit kann die Fahrtorientierung sehr exakt bestimmt werden, wobei ein Magnetfeldsensor sehr kostengünstig ist.

Um die Komplexität der Berechnung der Windinformationen zu verringern, kann die Berechnungseinheit ferner eingerichtet sein, die bestimmte Fahrtorientierung einem Kreissektor eines Orientierungskreises zuzuordnen. Als Orientierungskreis ist ein Kreis zu verstehen, welcher in verschiedene Sektoren, z.B. mit einem Mittelpunktswinkel von 45 Grad, aufgeteilt ist und einem Kompass hinsichtlich seiner Form ähnelt. Hierbei kann die durch die Navigationseinheit oder den Magnetfeldsensor bestimmte Fahrtorientierung demjenigen Kreissektor zugeordnet sein, in den die Fahrtorientierung hineinfällt. Dadurch kann die Berechnung der Windinformationen vereinfacht werden, indem die Berechnung nur für diese Kreissektoren und nicht für alle einzelnen bestimmten Fahrtorientierungen durchgeführt wird. Somit können wenigere Berechnungsschritte benötigt sein, was zu einer schnelleren Berechnung der Windinformationen führen kann. Es sei angemerkt, dass die Berechnung desto genauer ist, je mehr Kreissektoren der Orientierungskreis aufweist. Eine hohe Anzahl von Kreissektoren kann vorteilhaft z.B. bei Fahrstrecken sein, bei denen sich der Wind ständig ändert.

Vorteilhafterweise kann die Berechnungseinheit ferner eingerichtet sein, eine Reichweite basierend auf den berechneten Windinformationen zu berechnen und auf einer Anzeigeeinheit anzuzeigen, und/oder die berechneten Windinformationen auf einer Anzeigeeinheit anzuzeigen. Somit kann eine Reichweite bzw. eine Restreichweite in genauer Weise berechnet werden. Durch die Anzeigeeinheit kann der Fahrer bzw. der Nutzer schnell die Windinformationen und/oder seine Reichweite erfahren. Die Berechnung sowie das Anzeigen der Windinformationen und/oder der Reichweite können dynamisch sein, das heißt, dass diese während einer Fahrt z.B. in vorbestimmten Intervallen angepasst werden können.

Weiter bevorzugt kann die Anzeigeeinheit eingerichtet sein, die berechnete Reichweite und/oder die berechneten Windinformationen in einer virtuellen Karte darzustellen. Somit kann die berechnete Reichweite z.B. als geschlossene unregelmäßige Linie in einer Navigationseinheit angezeigt sein, wobei auch der aktuelle Standort in der virtuellen Karte markiert sein kann. Dadurch kann der Fahrer bzw. der Nutzer des Fahrzeugs in nutzerfreundlicher und ergonomischer Weise erfahren, wie groß seine Reichweite in allen Richtungen ist. Zusätzlich kann die berechnete Reichweite als Zahl angezeigt sein. Außerdem können die Windinformationen entweder schematisch und/oder nummerisch angezeigt sein. Die virtuelle Karte kann ferner während einer Fahrt dynamisch angepasst sein.

Nach einer weiteren vorteilhaften Ausgestaltung der vorliegenden Erfindung kann das erfindungsgemäße Fahrzeug ferner eine Speichereinheit zum Speichern der berechneten Windinformationen und/oder von schon gefahrenen Strecken umfassen, wobei die Berechnungseinheit die gespeicherten Windinformationen und/oder die gefahrenen Strecken bei der Berechnung der Windinformationen und/oder der Reichweite zusätzlich berücksichtigt. Somit können die gespeicherten Informationen hinsichtlich des Winds und/oder der schon gefahrenen Strecken z.B. bei einer Berechnung in einem nächsten Intervall und/oder das nächste Mal, wenn das Fahrzeug benutzt wird, verwendet werden. Dabei kann z.B. mittels einer Navigationseinheit eine zu fahrende Strecke zuerst erkannt werden und dann mittels einer Vergleichereinheit, welche auch Teil der Berechnungseinheit sein kann, geprüft werden, ob die zu fahrende Strecke mit einer schon gefahrenen Strecke übereinstimmt. Somit können für diese Fahrstrecke schon gespeicherte Windinformationen zum Anpassen bzw. Verbessern der jeweiligen zu berechnenden Windinformationen und/oder Reichweite berücksichtigt werden.

Um eine genauere Aussage über die Windinformationen und/oder die Reichweite machen zu können, kann die Berechnungseinheit die Windinformationen und/oder die Restreichweite innerhalb von einem vorbestimmten Mindestzeitraum und/oder einer vorbestimmten Mindeststrecke und/oder einem vorbestimmten Energieverbrauch iterativ berechnen. Erst nach Ablauf des vorbestimmten Mindestzeitraums und/oder der vorbestimmten Mindeststrecke und/oder des vorbestimmten Energieverbrauchs können die berechneten Windinformationen bzw. die Reichweite auf der Anzeigeeinheit angezeigt werden.

Weiter bevorzugt kann die Berechnungseinheit eingerichtet sein, einen Gegenwindindex zu berechnen. Als Gegenwindindex ist ein Index zu verstehen, der angibt, wie stark sich der Wind z.B. auf die Durchschnittsgeschwindigkeit ausgewirkt hat. Der Index kann insofern als eine Normalisierung der Geschwindigkeit des Fahrzeugs in Bezug auf die Geschwindigkeit des Winds dienen, wodurch z.B. die Leistungen des Fahrers in derselben Fahrstrecke miteinander verglichen bzw. bewertet werden können.

Des Weiteren können vorzugsweise die für eine Fahrstrecke berechneten Windinformationen in realer Zeit über eine Netzeinheit in eine Online-Landkarte eingetragen werden, wodurch andere Interessenten über die aktuellen lokalen Windinformationen in der entsprechenden Fahrstrecke informiert werden können. So können z.B. andere Fahrer ihre Fahrstrecke ändern bzw. optimieren.

Ferner bevorzugt kann die Berechnungseinheit die zu berechnenden Windinformationen mittels der folgenden Formel berechnen:

$$vw(\beta i) = [(\eta * F - m*a - m*g*(\sin(\alpha) + \mu) / \gamma] \wedge (1/2) - vf,$$

wobei:

$\beta i$ ein Kreissektor i eines Orientierungskreises, vw($\beta i$) eine zu berechnende Windstärke im Kreissektor i des Orientierungskreises in m/s, n ein Wirkungsgrad (dimensionlos), F eine Antriebskraft in N, m eine Fahrzeugmasse (Gesamtmasse vom Fahrzeug und Fahrer) in kg, a eine Beschleunigung des Fahrzeugs in m/s^2, g die Erdbeschleunigung in m/s^2, $\alpha$ ein Steigungswinkel oder ein Gefällewinkel einer Fahrstrecke in rad, $\mu$ ein Rollwiderstandskoeffizient der Fahrstrecke (dimensionlos), $\gamma$ ein Luftwiderstandskoeffizient in kg/m und vf eine Geschwindigkeit des Fahrzeugs in m/s sind.

Zusätzlich soll ein Verfahren beansprucht werden, welches die Merkmale der Berechnung der Windinformation basierend auf wenigstens einer Fahrzeugmasse, einem Antriebsmoment, einer Fahrzeuggeschwindigkeit und einer Fahrtorientierung aufweist. Bzgl. der weiteren möglichen Merkmale zur optionalen Erweiterung des Verfahrens sei auf den Ablauf verwiesen, welcher in der Berechnungseinheit zur Berechnung der Windinformation abläuft sowie auf die nachfolgende Beschreibung.

Das Fahrzeug umfasst bevorzugt eine Sende- und/oder Empfangseinheit zur Übertragung der Windinformationen an einen Server.

Kurze Beschreibung der Zeichnungen

Nachfolgend wird ein bevorzugtes Ausführungsbeispiel der Erfindung unter Bezugnahme auf die begleitende Zeichnung im Detail beschrieben. In der Zeichnung sind:

Figur 1     eine schematische, vereinfachte Ansicht eines Elektrofahrrads gemäß einem bevorzugten Ausführungsbeispiel der Erfindung,

Figur 2     eine schematische Darstellung einer virtuellen Karte einer Anzeigeeinheit gemäß einem bevorzugten Ausführungsbeispiel der Erfindung, und

Figur 3     eine schematische Darstellung eines Orientierungskreises gemäß einem bevorzugten Ausführungsbeispiel der Erfindung.

Bevorzugte Ausführungsform der Erfindung

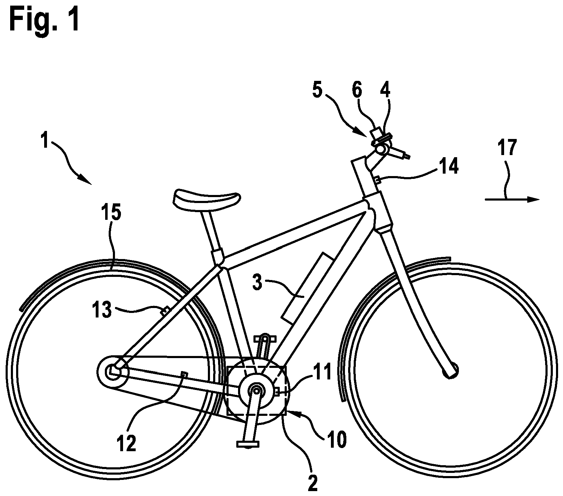

Nachfolgend wird unter Bezugnahme auf die Figuren 1 bis 3 ein Elektrofahrrad 1 gemäß einem bevorzugten Ausführungsbeispiel der Erfindung im Detail beschrieben.

Wie aus der Figur 1 ersichtlich ist, umfasst das Elektrofahrrad 1 einen elektrischen Antrieb 2, einen Energiespeicher 3 und eine Berechnungseinheit 4, welche eingerichtet ist, Windinformationen basierend auf einer Fahrzeugmasse, einem Antriebsmoment, einer Fahrzeuggeschwindigkeit und einer Fahrtorientierung zu berechnen. Als Windinformationen sind z.B. eine Windstärke und/oder eine Windrichtung zu verstehen. Zur Berechnung der Windinformation innerhalb der Berechnungseinheit 4 ist ein Verfahren vorgesehen, welches die gleichen Merkmale aufweist wie nachfolgend zur Ausführung der Berechnungseinheit 4 beschrieben wird.

Das Elektrofahrrad 1 weist ferner einen Kurbeltrieb 10 auf, wobei im Bereich des Kurbeltriebs 10 der elektrische Antrieb 2 angeordnet ist. Der elektrische Antrieb 2 wird vom Energiespeicher 3 mit Energie versorgt. Der Energiespeicher 3 ist als ein Akku ausgebildet.

Die Berechnungseinheit 4 ist am Lenker des Elektrofahrrads 1 angeordnet. Ferner ist die Berechnungseinheit 4 mit dem elektrischen Antrieb 2 verbunden und wird ebenfalls vom Energiespeicher 3 mit Energie versorgt.

Das Elektrofahrrad 1 umfasst ferner einen Drehmomentsensor 11, welcher erfasst, wie hoch die Summe eines von einem Fahrer am Kurbeltrieb 10 aufgebrachten Drehmoments und eines vom elektrischen Antrieb 2 erzeugten Drehmoments ist. Somit kommt vom Drehmomentsensor 11 das Signal zur Berechnungseinheit 4, wie hoch das Gesamtdrehmoment am Kurbeltrieb 10 ist, was zur Berechnung der Windinformationen benutzt werden kann.

Weiterhin weist das Elektrofahrrad 1 ferner einen Geschwindigkeitssensor 12 auf, welcher eine Geschwindigkeit des Fahrzeugs erfasst. Dabei kann der Geschwindigkeitssensor 12 beispielsweise als Raddrehzahlsensor zur Erfassung einer Drehzahl eines Hinterrades 15 ausgebildet sein oder als direktmessender Geschwindigkeitssensor 12, welcher die Geschwindigkeit über dem Untergrund erfasst.

Das Elektrofahrrad 1 umfasst ferner einen dritten Sensor, welcher als ein Beschleunigungssensor 13 ausgebildet ist. Der Beschleunigungssensor 13 erfasst somit eine Beschleunigung des Fahrzeugs. Der Beschleunigungssensor 13 ist dabei an einem Rahmen des Elektrofahrrads 1 angeordnet. Alternativ kann die Beschleunigung über die mittels des Geschwindigkeitssensors 12 erfasste Geschwindigkeit abgeleitet werden.

Ein vierter Sensor ist als Neigungssensor 14 ausgebildet. Der Neigungssensor 14 erfasst eine Neigung des Fahrzeugs. Beispielsweise kann der Neigungssensor 14 eine Neigung des Fahrzeugs in Fahrtrichtung 17 erfassen, so dass auf einfache Weise ein Streckenprofil, beispielsweise eine Bergfahrt oder eine Abfahrt erfasst werden kann. Somit kann z.B. eine Steigung oder ein Gefälle einer Strecke bei der Berechnung der Windinformationen des Elektrofahrrads 1 mitberücksichtigt werden. Alternativ oder zusätzlich zu dem Neigungssensor 14 kann beispielsweise das Streckenprofil mittels eines barometrischen Drucksensors und/oder des Beschleunigungssensors 13 erfasst werden.

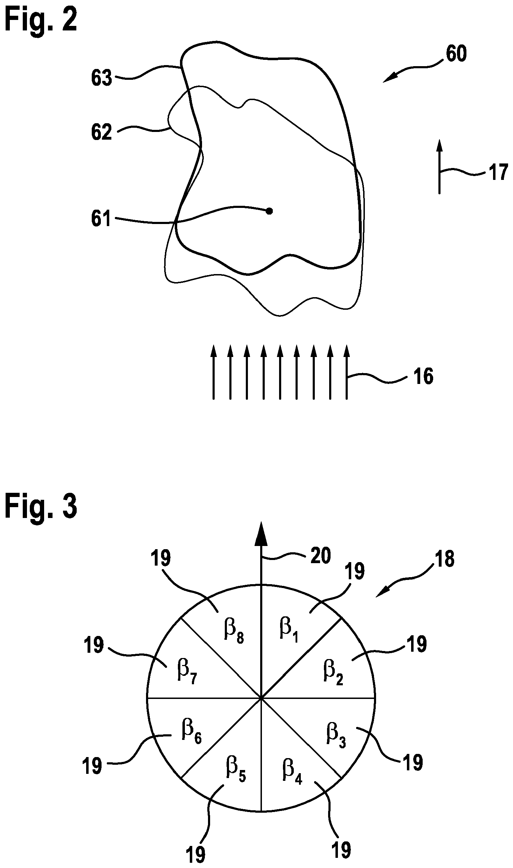

Um die Fahrorientierung zu bestimmen, welche auch bei der Berechnung der Windinformationen des Elektrofahrrads 1 berücksichtigt ist, weist das Elektrofahrrad 1 eine nicht näher angezeigte Navigationseinheit 5 auf, welche auch am Lenker des Elektrofahrrads 1 angeordnet ist. Die Navigationseinheit 5 dient auch dazu, einen Standort 61 des Elektrofahrrads 1 zu bestimmen (Figur 3). Die Navigationseinheit 5 ist mit der Berechnungseinheit 4 verbunden. Alternativ kann die Fahrtorientierung beispielsweise über einen Magnetfeldsensor bestimmt werden.

Das Elektrofahrrad 1 weist ferner eine nicht gezeigte Mensch-Maschine-Schnittstelle auf, welche als Teil der Berechnungseinheit 4 ausgebildet ist (Figur 1). Dadurch kann der Fahrer seine Masse bzw. die gesamte Fahrzeugmasse, nämlich seine Masse und die Masse des Elektrofahrrads, eingeben.

Somit kann die Berechnungseinheit 4 die Windinformationen basierend auf einer Fahrzeugmasse, einem Antriebsmoment, einer Fahrzeuggeschwindigkeit und einer Fahrtorientierung berechnen.

Die erfindungsgemäße Berechnungseinheit 4 ist ferner eingerichtet, eine Reichweite basierend auf den berechneten Windinformationen zu berechnen. Dabei muss unbedingt auch der Ladezustand des Energiespeichers 3 berücksichtigt werden.

Das Elektrofahrrad 1 weist ferner eine Anzeigeeinheit 6 auf, auf welcher die berechneten Windinformationen und Reichweite angezeigt werden. In diesem Ausführungsbeispiel ist die Anzeigeeinheit 6 als Teil der Navigationseinheit 5 ausgebildet.

Ferner ist die Anzeigeeinheit 6 eingerichtet, die berechnete Reichweite und die berechneten Windinformationen in einer virtuellen Karte 60 der Anzeigeeinheit 6 darzustellen. Wie aus der Figur 2 ersichtlich ist, ist ein aktueller Standpunkt 61 des Elektrofahrrads 1, eine erste Reichweite 62 und eine zweite Reichweite 63 in der virtuellen Karte 60 gezeigt. Die erste Reichweite 62 ist ohne Berücksichtigung des herrschenden lokalen Winds oder basierend auf ungenauen Windinformationen berechnet. Auf der anderen Seite ist die zweite Reichweite 63 basierend auf über die Berechnungseinheit 4 genau bestimmten Windinformationen berechnet. Da in diesem Fall der herrschende Wind in einer Richtung 16 weht, welche mit einer Fahrtorientierung 17 des Elektrofahrrads 1 übereinstimmt, das heißt, dass der Wind ist ein Rückenwind ist, ist die zweite Reichweite 63 in Fahrrichtung 17 größer als die erste Reichweite 62. Dadurch kann der Fahrer darüber informiert werden, dass er mehrere Orte in Fahrtrichtung 17 mit dem aktuellen Ladezustand des Energiespeichers erreichen kann. Es sei angemerkt, dass die virtuelle Karte während der Fahrt dynamisch angepasst wird.

In Figur 3 ist ein Orientierungskreis 18 mit mehreren Kreissektoren 19 (β1...β8) gezeigt, wobei der Norden mit einem Pfeil 20 bezeichnet ist. Der Orientierungskreis 18 dient dazu, die Berechnung der Windinformationen zu erleichtern, wobei die über die Navigationseinheit 5 bestimmte Fahrtorientierung einem Kreissektor 19 des Orientierungskreises 18 zugeordnet wird. Dadurch kann erfolgt die Berechnung der Windinformationen nur in den Kreissektoren 19 erfolgen.

Es sei angemerkt, dass die vorhergehende Ausführungsform nur zu illustrativen Zwecken und nicht zum Zwecke der Beschränkung der Erfindung dient. Im Rahmen der Erfindung sind verschieden Änderungen und Modifikationen möglich, ohne den Umfang der Erfindung sowie ihrer Äquivalente zu verlassen. Somit kann z.B. eine einzige elektronische Einheit ebenso vorstellbar sein, welche die Berechnungseinheit, die Anzeigeeinheit und die Navigationseinheit in einem Bauteil umfasst.

Durch das erfindungsgemäße motorisch und/oder mit Muskelkraft betreibbare Elektrofahrrad 1 können Windinformationen exakt berechnet werden, ohne dass eine zusätzliche Windmessung benötigt ist. Somit lässt sich ferner eine Reichweite des Elektrofahrrads 1 genau berechnen. Das vorgeschlagene erfindungsgemäße Elektrofahrrad 1 macht sich die schon zur Messung von Fahrparametern vorhandenen Sensoren zunutze, wodurch eine Kostenersparnis erreicht werden kann.

In einem weiteren Ausführungsbeispiel wird die berechnete Windinformation dazu genutzt, den Antrieb des Fahrzeugs und somit den Vortrieb durch einen Motor zu steuern. Hierbei kann beispielsweise die Information über den Gegenwind genutzt werden, um einen Ausgleich der Geschwindigkeit des Fahrzeugs durch den Antrieb zu erreichen. Besonders vorteilhaft ist diese Ausgestaltung bei einem Elektrofahrrad 1, bei dem der Fahrradfahrer wenigstens einen Teil der Fortbewegung selber aufbringen muss. Durch eine Kompensation des Gegenwinds mittels des Motors erfährt der Fahrer keine Abbremsung, so dass er ohne zusätzliche Kraftanstrengung die gleiche Geschwindigkeit erreichen kann. Alternativ oder optional kann auch die Erkenntnis über einen Rückenwind verwendet werden, um den Motor abzudrosseln. Der Fahrer erfährt hier keine Erhöhung der Fahrtgeschwindigkeit durch den Rückenwind, jedoch führt diese Abregelung dazu, dass die Beladung des Energiespeichers geschont wird. Durch diese Ausgestaltung erhöht sich bei regelmäßigem Rückenwind die Reichweite des Fahrzeugs.

Statt den Antrieb aufgrund der Windinformation zu steuern, kann zusätzlich oder optional auch die Energieabgabe durch den Energiespeicher 3 geregelt werden. So ist möglich, bei einem Gegenwind die maximale Abgabe der Energie aus dem Energiespeicher 3 anzuheben, während bei einem Rückenwind die maximale Abgabe reduziert wird. Typischerweise werden sowohl die Erhöhung als auch die Reduzierung der maximalen Energie über Schwellenwerte gesteuert. Optional kann auch vorgesehen sein, dass bei der Abgabe der Energie aus dem Energiespeicher 3 auch die evtl. zuvor berechnete Reichweite berücsichtigt wird. Dies kann beispielsweise dazu führen, dass die Schwellenwerte weiter erhöht bzw. erniedrigt werden, z.B. wenn erkannt wird, dass das Ziel der Fahrt in Reichweite liegt.

Es sei ausdrücklich erwähnt, dass das Verfahren, welches in der Berechnungseinheit 4 verwendet wird, zur Berechnung der Windinformation zumindest eine Fahrzeugmasse, ein Antriebsmoment, eine Fahrzeuggeschwindigkeit und eine Fahrtorientierung berücsichtigt. Dabei kann die Windinformation sowohl eine Windstärke und/oder eine Windrichtung umfassen.

Die Windinformation kann dabei basierend auf einem Streckenprofil einer zu befahrenden Strecke berechnet werden.

Weiterhin kann die Fahrtorientierung einem Kreissektor eines Orientierungskreises zugeordnet werden.

Die Reichweite des Fahrzeugs kann dabei in dem Verfahren basierend auf den Windinformationen berechnet werden und auf einer Anzeigeeinheit 6 angezeigt werden.

Das Verfahren kann ebenfalls dazu genutzt werden, in Abhängigkeit von der berechneten Windinformation den Antrieb zu steuern. Dabei kann beispielsweise vorgesehen sein, bei einer Erhöhung des Gegenwinds eine Erhöhung des Antriebs und/oder bei einer Erhöhung des Rückenwinds eine Erniedrigung des Antriebs vorgenommen wird.

Weiterhin kann vorgesehen sein, dass die Energieabgabe des Energiespeichers 3 in Abhängigkeit der berechneten Windinformation geregelt wird, wobei zusätzlich vorgesehen sein kann, dass bei einer Erhöhung des Gegenwinds eine höhere Energieabgabe freigeschalten wird und/oder bei einer Erhöhung des Rückenwinds eine Begrenzung der Energieabgabe vorgesehen ist.

Optional kann ebenfalls vorgesehen sein, dass die Energieabgabe des Energiespeichers 3 zusätzlich in Abhängigkeit von einer berechneten Reichweite des Fahrzeugs geregelt wird, wobei vorgesehen sein kann, dass die Reichweite aufgrund der Beladung des Energiespeichers und der Windinformation berechnet wird.

## Patentansprüche

1.   Motorisch und/oder mit Muskelkraft betreibbares Fahrzeug, insbesondere Elektrofahrrad (1), umfassend:

- einen elektrischen Antrieb (2),
- einen Energiespeicher (3) , welcher den elektrischen Antrieb (2) mit Energie versorgt, und
- eine Berechnungseinheit (4), welche eingerichtet ist, Windinformationen basierend auf einer Fahrzeugmasse, einem Antriebsmoment, einer Fahrzeuggeschwindigkeit und einer Fahrtorientierung zu berechnen.

2.   Fahrzeug nach Anspruch 1, wobei die Windinformationen eine Windstärke und/oder eine Windrichtung umfassen.

3.   Fahrzeug nach einem der vorherigen Ansprüche, wobei die Berechnungseinheit (4) ferner eingerichtet ist, die Windinformationen ferner basierend auf einem Streckenprofil einer zu fahrenden Strecke zu berechnen.

4.   Fahrzeug nach Anspruch 3, wobei das Streckenprofil mittels eines Beschleunigungssensors (13) und/oder eines barometrischen Drucksensors und/oder eines Neigungssensors (14) bestimmbar ist.

5.   Fahrzeug nach einem der vorherigen Ansprüche, wobei die Fahrzeugmasse mittels eines Massenschätzeralgorithmus und/oder mittels eines Gewichtssensors und/oder mittels einer Eingabeinformation und/oder eines vorgegebenen konstanten Werts bestimmbar ist.

6.   Fahrzeug nach einem der vorherigen Ansprüche, wobei die Fahrtorientierung mittels einer Navigationseinheit (5) oder eines Magnetfeldsensors bestimmbar ist.

**7.** Fahrzeug nach Anspruch 6, wobei die Berechnungseinheit (4) ferner eingerichtet ist, die bestimmte Fahrtorientierung einem Kreissektor (19) eines Orientierungskreises (18) zuzuordnen.

**8.** Fahrzeug nach einem der vorherigen Ansprüche, wobei die Berechnungseinheit (4) ferner eingerichtet ist, eine Reichweite basierend auf den berechneten Windinformationen zu berechnen und auf einer Anzeigeeinheit (6) anzuzeigen, und/oder die berechneten Windinformationen auf einer Anzeigeeinheit (6) anzuzeigen.

**9.** Fahrzeug nach Anspruch 8, wobei die Anzeigeeinheit (6) eingerichtet ist, die berechnete Reichweite und/oder die berechneten Windinformationen in einer virtuellen Karte (60) darzustellen.

**10.** Fahrzeug nach einem der vorherigen Ansprüche, ferner umfassend eine Speichereinheit zum Speichern der berechneten Windinformationen und/oder von schon gefahrenen Strecken, wobei die Berechnungseinheit (4) die gespeicherten Windinformationen und/oder schon gefahrenen Strecken bei der Berechnung der Windinformationen und/oder der Reichweite berücksichtigt.

**11.** Fahrzeug nach einem der vorherigen Ansprüche, ferner umfassend eine Sende- und/oder Empfangseinheit zur Übertragung der Windinformationen an einen Server.

**12.** Fahrzeug nach einem der vorherigen Ansprüche, **dadurch gekennzeichnet, dass** der Antrieb in Abhängigkeit der berechneten Windinformation angesteuert wird, wobei insbesondere vorgesehen ist, dass bei einer Erhöhung des Gegenwinds eine Erhöhung des Antriebs (2) und/oder bei einer Erhöhung des Rückenwinds eine Erniedrigung des Antriebs (2) vorgesehen ist.

**13.** Fahrzeug nach einem der vorherigen Ansprüche, **dadurch gekennzeichnet, dass** die Energieabgabe des Energiespeichers in Abhängigkeit der berechneten Windinformation geregelt wird, wobei insbesondere vorgesehen ist, dass bei einer Erhöhung des Gegenwinds eine höhere Energieabgabe freigeschalten wird und/oder bei einer Erhöhung des Rückenwinds eine Begrenzung der Energieabgabe vorgesehen ist.

**14.** Fahrzeug nach Anspruch 13, **dadurch gekennzeichnet, dass** die Energieabgabe des Energiespeichers zusätzlich in Abhängigkeit von einer berechneten Reichweite des Fahrzeugs geregelt wird, wobei insbesondere vorgesehen ist, dass die Reichweite aufgrund der Beladung des Energiespeichers und der Windinformation berechnet wird.

**15.** Verfahren zur Berechnung einer Windinformation, insbesondere zur Anwendung in einer Berechnungseinheit (4) eines mittels motorischer oder muskulärer Kraft betreibbaren Fahrzeugs nach Anspruch 1, wobei eine Fahrzeugmasse, ein Antriebsmoment des Fahrzeugs, eine Fahrzeuggeschwindigkeit und eine Fahrtorientierung erfasst werden, um daraus die Windinformation zu berechnen.

**Claims**

**1.** Vehicle that can be motorized and/or powered by muscle strength, in particular electric bicycle (1), comprising:

- an electric drive (2),
- an energy accumulator (3) which supplies the electric drive (2) with energy, and
- a calculation unit (4) which is configured for calculating wind information on the basis of a vehicle mass, a driving torque, a vehicle speed and travel orientation.

**2.** Vehicle according to Claim 1, wherein the wind information includes wind strength and/or wind direction.

**3.** Vehicle according to either of the preceding claims, wherein the calculation unit (4) is furthermore configured to calculate the wind information furthermore on the basis of a route profile of a route to be travelled.

**4.** Vehicle according to Claim 3, wherein the route profile can be determined by means of an acceleration sensor (13) and/or a barometric pressure sensor and/or an inclination sensor (14).

**5.** Vehicle according to one of the preceding claims, wherein the vehicle mass can be determined by means of a mass estimator algorithm and/or by means of a weight sensor and/or by means of input information and/or a predetermined constant value.

**6.** Vehicle according to one of the preceding claims, wherein the travel orientation can be determined by means of a navigation unit (5) or a magnetic field sensor.

**7.** Vehicle according to Claim 6, wherein the calculation unit (4) is furthermore configured to assign the defined travel orientation to a circular sector (19) of an orientation circle (18).

**8.** Vehicle according to one of the preceding claims, wherein the calculation unit (4) is furthermore configured to calculate a range on the basis of the calculated wind information and to display said range on a display unit (6), and/or to display the calculated wind information on a display unit (6).

**9.** Vehicle according to Claim 8, wherein the display unit (6) is configured to depict the calculated range and/or the calculated wind information on a virtual map (60).

**10.** Vehicle according to one of the preceding claims, furthermore comprising a storage unit for storing the calculated wind information and/or routes already travelled, wherein the calculation unit (4) takes into consideration the stored wind information and/or routes already travelled in the calculation of the wind information and/or the range.

**11.** Vehicle according to one of the preceding claims, furthermore comprising a transmission and/or receiving unit for transmitting the wind information to a server.

**12.** Vehicle according to one of the preceding claims, **characterized in that** the drive is activated depending on the calculated wind information, wherein it is provided in particular that, in the event of an increase in the head wind, an increase in the drive (2) is provided, and/or, in the event of an increase in the tail wind, a reduction in the drive (2) is provided.

**13.** Vehicle according to one of the preceding claims, **characterized in that** the energy output of the energy accumulator is adjusted depending on the calculated wind information, wherein it is provided in particular that, in the event of an increase in the head wind, a higher energy output is released, and/or, in the event of an increase in the tail wind, a limiting of the energy output is provided.

**14.** Vehicle according to Claim 13, **characterized in that** the energy output of the energy accumulator is additionally adjusted depending on a calculated range of the vehicle, wherein it is provided in particular that the range is calculated on the basis of the charging of the energy accumulator and the wind information.

**15.** Method for calculating wind information, in particular for use in a calculation unit (4) of a vehicle that can be motorized or powered by muscle strength according to Claim 1, wherein a vehicle mass, a driving torque of the vehicle, a vehicle speed and travel orientation are detected in order to calculate the wind information therefrom.

**Revendications**

**1.** Véhicule pouvant être propulsé par un moteur et/ou par la force musculaire, notamment bicyclette électrique (1), comprenant :

- un mécanisme d'entraînement électrique (2),
- un accumulateur d'énergie (3) qui alimente le mécanisme d'entraînement électrique (2) en énergie, et
- une unité de calcul (4) qui est conçue pour calculer des informations de vent en se basant sur une masse du véhicule, un couple d'entraînement, une vitesse du véhicule et une orientation de la marche.

**2.** Véhicule selon la revendication 1, les informations de vent comprenant une force du vent et/ou une direction du vent.

**3.** Véhicule selon l'une des revendications précédentes, l'unité de calcul (4) étant en outre conçue pour calculer les informations de vent en plus en se basant sur un profil de trajet d'un trajet à parcourir.

**4.** Véhicule selon la revendication 3, le profil de trajet pouvant être déterminé au moyen d'un capteur d'accélération (13) et/ou d'un capteur de pression barométrique et/ou d'un capteur d'inclinaison (14).

**5.** Véhicule selon l'une des revendications précédentes, la masse du véhicule pouvant être déterminée au moyen d'un algorithme d'estimation de masse et/ou au moyen d'un capteur de poids et/ou au moyen d'une information saisie et/ou d'une valeur constante prédéfinie.

6. Véhicule selon l'une des revendications précédentes, l'orientation de la marche pouvant être déterminée au moyen d'une unité de navigation (5) ou d'un capteur de champ magnétique.

7. Véhicule selon la revendication 6, l'unité de calcul (4) étant en outre conçue pour associer l'orientation déterminée du véhicule à un arc de cercle (19) d'un cercle d'orientation (18).

8. Véhicule selon l'une des revendications précédentes, l'unité de calcul (4) étant en outre conçue pour calculer un rayon d'action en se basant sur les informations de vent calculées et l'afficher sur une unité d'affichage (6) et/ou pour afficher les informations de vent calculées sur une unité d'affichage (6).

9. Véhicule selon la revendication 8, l'unité d'affichage (6) étant conçue pour représenter le rayon d'action calculé et/ou les informations de vent calculées sur une carte virtuelle (60).

10. Véhicule selon l'une des revendications précédentes, comprenant en outre une unité de mémoire destinée à enregistrer les informations de vent calculées et/ou les trajets déjà parcourus, l'unité de calcul (4) tenant compte des informations de vent et/ou des trajets déjà parcourus enregistrés lors du calcul des informations de vent et/ou du rayon d'action.

11. Véhicule selon l'une des revendications précédentes, comprenant en outre une unité d'émission et/ou de réception destinée à la transmission des informations de vent à un serveur.

12. Véhicule selon l'une des revendications précédentes, **caractérisé en ce que** le mécanisme d'entraînement est commandé en fonction des informations de vent calculées, en prévoyant notamment de prévoir un accroissement de l'entraînement (2) en cas d'accroissement du vent de face et/ou une réduction de l'entraînement (2) en cas d'accroissement du vent de dos.

13. Véhicule selon l'une des revendications précédentes, **caractérisé en ce que** l'énergie délivrée par l'accumulateur d'énergie est régulée en fonction des informations de vent calculées, en prévoyant notamment d'autoriser une énergie délivrée plus importante en cas d'accroissement du vent de face et/ou de prévoir une limitation de l'énergie délivrée en cas d'accroissement du vent de dos.

14. Véhicule selon la revendication 13, **caractérisé en ce que** l'énergie délivrée par l'accumulateur d'énergie est en plus régulée en fonction d'un rayon d'action calculé du véhicule, en prévoyant notamment que le rayon d'action est calculé en se basant sur la charge de l'accumulateur d'énergie et des informations de vent.

15. Procédé de calcul d'informations de vent, notamment destiné à être utilisé dans une unité de calcul (4) d'un véhicule pouvant être propulsé par un moteur ou par la force musculaire selon la revendication 1, une masse de véhicule, un couple d'entraînement du véhicule, une vitesse du véhicule et une orientation de la marche étant collectés afin de calculer les informations de vent à partir ce ceux-ci.

# Fig. 1

## Fig. 2

63

62

61

60

17

16

## Fig. 3

19    20    19    18

$\beta_8$    $\beta_1$

19    $\beta_7$    $\beta_2$    19

$\beta_6$    $\beta_3$

19    $\beta_5$    $\beta_4$    19

19    19

**EP 2 965 982 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009016869 A1
- US 2006095191 A